# FASCICULE DE BREVET EUROPEEN

(11) **EP 2 572 478 B1**
(45) Date de publication et mention de la délivrance du brevet: **19.07.2017**
(21) Numéro de dépôt: 11725171.0
(22) Date de dépôt: 13.05.2011
(51) Int. Cl.: H04L 12/729

(54) **PROCEDE D'OPTIMISATION DE ROUTAGE DANS UN CLUSTER COMPRENANT DES LIENS DE COMMUNICATION STATIQUES ET PROGRAMME D'ORDINATEUR METTANT EN OEUVRE CE PROCEDE**
VERFAHREN ZUR ROUTING-OPTIMIERUNG BEI EINEM CLUSTER MIT STATISCHEN KOMMUNIKATIONSVERBINDUNGEN UND COMPUTERPROGRAMM ZUR UMSETZUNG DIESES VERFAHRENS
METHOD OF OPTIMIZING ROUTING IN A CLUSTER COMPRISING STATIC COMMUNICATION LINKS AND COMPUTER PROGRAM IMPLEMENTING THIS METHOD

(30) Priorité: 20.05.2010 FR 1002126
(43) Date de publication de la demande: 27.03.2013
(73) Titulaire: Bull SAS, 78340 Les Clayes-sous-Bois (FR)
(72) Inventeur: DUGUE, Sébastien, F-38119 Saint Theoffrey (FR); FICET, Jean-Vincent, F-73110 La Chapelle Blanche (FR); KALEMKARIAN, Yann, F-38110 Grenoble (FR); MOREY-CHAISEMARTIN, Nicolas, F-38400 Saint-martin D'Heres (FR)
(74) Mandataire: Santarelli
(86) Numéro de dépôt international: PCT/FR2011/051080
(87) Numéro de publication internationale: WO 2011/144848

(56) Documents cités:
- EP-A2- 1 087 576
- US-A1- 2008 256 079
- TORSTEN HOEFLER ET AL: "Optimized Routing for Large-Scale InfiniBand Networks", HIGH PERFORMANCE INTERCONNECTS, 2009. HOTI 2009. 17TH IEEE SYMPOSIUM ON, IEEE, PISCATAWAY, NJ, USA, 25 août 2009 (2009-08-25), pages 103-111, XP031528530, ISBN: 978-0-7695-3847-1
- IZMAILOV R ET AL: "Administrative weight allocation for PNNI routing algorithms", HIGH PERFORMANCE SWITCHING AND ROUTING, 2001 IEEE WORKSHOP ON 29-31 MAY 2001, PISCATAWAY, NJ, USA,IEEE, 29 mai 2001 (2001-05-29), pages 347-352, XP010542826, ISBN: 978-0-7803-6711-1

## Description

La présente invention concerne le routage dans un cluster, c'est-à-dire la détermination de routes de communication entre un ensemble de noeuds du cluster, et plus particulièrement un procédé d'optimisation de routage dans un cluster comprenant des liens de communication statiques et un programme d'ordinateur mettant en oeuvre ce procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou Infiniband (Ethernet et Infiniband sont des marques).

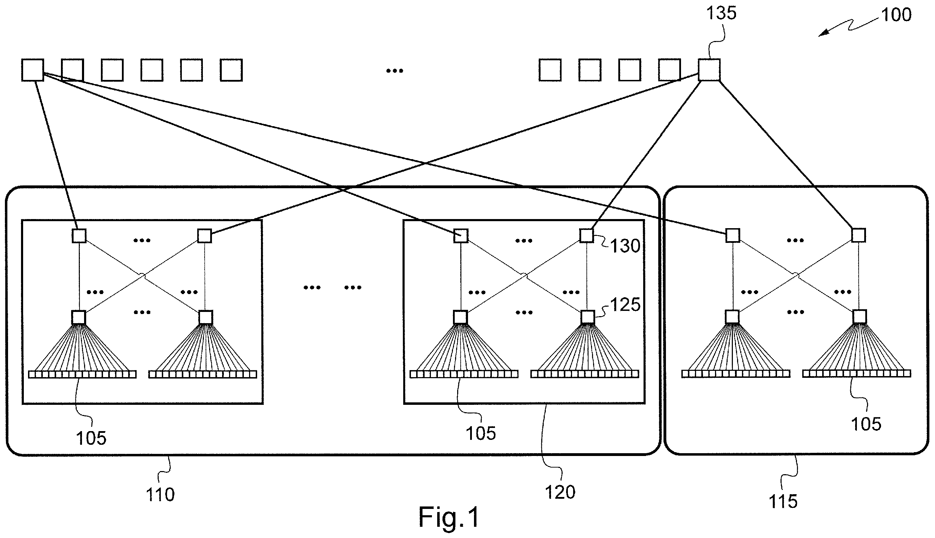

La figure 1 illustre schématiquement un exemple d'une topologie 100 d'un cluster, de type *fat-tree*. Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

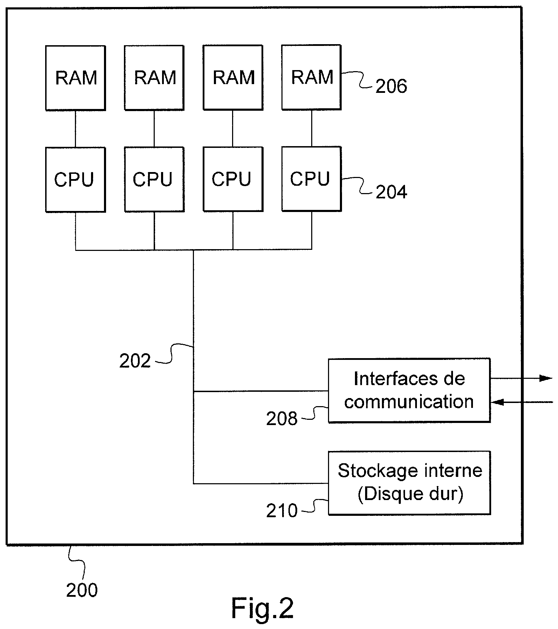

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le noeud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Il est observé ici que les performances d'un cluster sont directement liées à la qualité des routes permettant le transfert de données entre les noeuds, établies via des liens de communication. De façon générale, des liens de communication physiques sont établis entre les noeuds et les commutateurs lors de la configuration matérielle d'un cluster, les routes de communication étant elles-mêmes déterminées dans une phase d'initialisation à partir d'une définition des connexions devant êtres établies entre les noeuds. Selon la technologie de communication mise en oeuvre, la configuration des routes peut être statique ou dynamique.

Le document EP1087576 A3 présente un procédé de sélection de routes de communications qui tient en compte un coût associé par l'utilisation d'un lien en particulier, notamment le niveau de charge de chaque lien disponible entre les différents noeuds, et déterminant une route ayant un coût cumulé minimum.

A titre d'illustration, la technologie Infiniband permet, dans un cluster, une configuration statique des routes. Cette configuration utilise des tables statiques de routage (ou LFT, sigle de *Linear Forwarding Table* en terminologie anglo-saxonne) dans chaque commutateur. Lorsque cette technologie est mise en oeuvre, un algorithme de routage tel que les algorithmes connus sous les noms de FTree, MINHOP, UPDN et LASH peut être utilisé.

De façon simplifiée, l'algorithme FTree détermine des routes de telle sorte que celles-ci soient réparties autant que possible à travers les liens de communication existants. A ces fins, lors du routage d'un réseau de communication entièrement connecté selon une architecture de type FTree, chaque noeud du réseau est considéré comme ayant une même importance. Ainsi, lorsqu'une route est établie entre deux noeuds d'un même lien, le nombre de routes utilisant ce lien, appelé la charge du lien, est augmenté de un. Lorsque l'algorithme de routage cherche à établir une nouvelle route et que plusieurs possibilités se présentent, il compare les niveaux de charge associés aux liens sur lesquels sont basées ces possibilités et choisit celle dont les liens ont le niveau de charge le plus faible.

La qualité de routage peut être exprimée en termes de nombre de routes par lien.

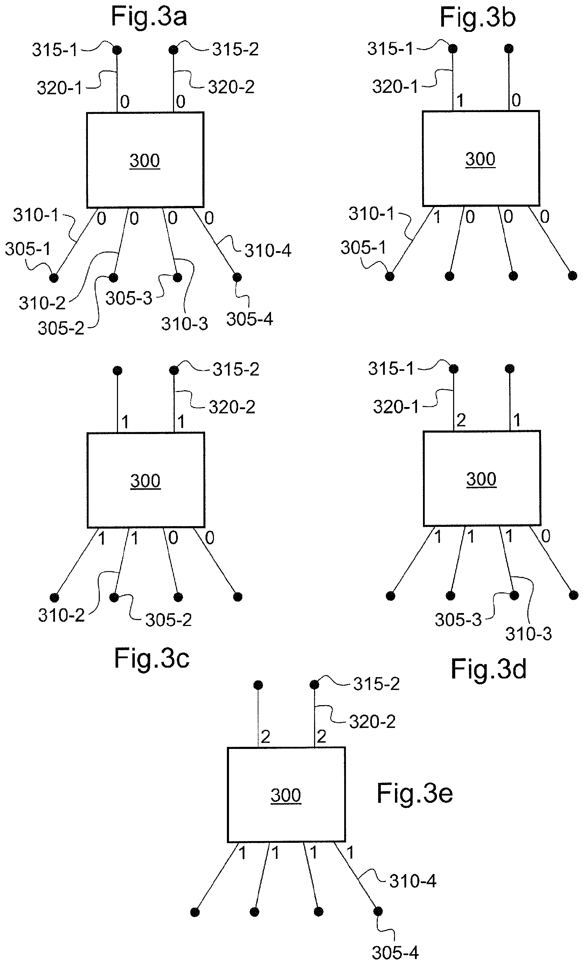

La figure 3, comprenant les figures 3a à 3e, illustre ce principe de routage dans un commutateur 300 lors d'une phase d'initialisation d'un cluster comprenant ce commutateur.

Le commutateur 300 a ici quatre liens de communication d'entrée, notés 310-1 à 310-4, reliant le commutateur 300 à des entrées 305-1 à 305-4 et deux liens de communication de sortie, notés 320-1 et 320-2, reliant le commutateur 300 à des sorties 315-1 et 315-2. Avant l'initialisation, aucun des liens 310-1 à 310-4, 320-1 et 320-2 ne comprend de route. Les niveaux de charge associés à ces liens sont donc nuls comme illustré sur la figure 3a à côté de chaque lien. Puis, lorsqu'une route doit être établie entre l'entrée 305-1 et une sortie du commutateur 300, le lien 310-1 (le seul pouvant être utilisé) est sélectionné ainsi que le lien 320-1 (les niveaux de charge associés aux liens 320-1 et 320-2 étant égaux, ici à zéro, le premier lien est sélectionné). Les niveaux de charge associés aux liens 310-1 et 320-1 sont alors incrémentés de un pour indiquer que ces liens mettent en oeuvre une route supplémentaire, comme illustré sur la figure 3b.

De même, lorsqu'une route doit être établie entre l'entrée 305-2 et une sortie du commutateur 300, le lien 310-2 (le seul pouvant être utilisé) est sélectionné ainsi que le lien 320-2 (le niveau de charge associé au lien 320-1 étant égal à un et le niveau de charge associé au lien 320-2 étant égal à zéro, ce dernier lien est sélectionné). Les niveaux de charge associés aux liens 310-2 et 320-2 sont alors incrémentés de un pour indiquer que ces liens mettent en oeuvre une route supplémentaire, comme illustré sur la figure 3c. De façon similaire, lorsqu'une route doit être établie entre l'entrée 305-3 et une sortie du commutateur 300, le lien 310-3 (le seul pouvant être utilisé) est sélectionné ainsi que le lien 320-1 (les niveaux de charge associés aux liens 320-1 et 320-2 étant égaux, le premier lien est sélectionné). Les niveaux de charge associés aux liens 310-3 et 320-1 sont alors incrémentés de un pour indiquer que ces liens mettent en oeuvre une route supplémentaire, comme illustré sur la figure 3d.

Enfin, lorsqu'une route doit être établie entre l'entrée 305-4 et une sortie du commutateur 300, le lien 310-4 (le seul pouvant être utilisé) est sélectionné ainsi que le lien 320-2 (le niveau de charge associé au lien 320-1 étant égal à deux et le niveau de charge associé au lien 320-2 étant égal à un, ce dernier lien est sélectionné). Les niveaux de charge associés aux liens 310-4 et 320-2 sont alors incrémentés de un pour indiquer que ces liens mettent en oeuvre une route supplémentaire, comme illustré sur la figure 3e. Lorsque toutes les routes entre les noeuds ont été établies, les tables statiques de routage des commutateurs sont mises à jour.

Cependant, alors que ces algorithmes de routage donnent de bons résultats, ces derniers ne sont pas optimaux.

L'invention permet de résoudre au moins un des problèmes exposés précédemment.

L'invention a ainsi pour objet un procédé pour ordinateur d'optimisation de routage tel qu'il est capturé dans la revendication 1. Le procédé porte sur une telle optimisation dans un cluster comprenant une pluralité de noeuds, des liens de communication statiques reliant des noeuds de ladite pluralité de noeuds, ledit routage étant basé sur des niveaux de charge associés auxdits liens de communication, ce procédé comprenant les étapes suivantes,
- identification d'au moins deux noeuds dudit cluster, une connexion devant être établie entre lesdits au moins deux noeuds identifiés ;
- détermination d'au moins une route connectant lesdits au moins deux noeuds identifiés selon lesdits liens de communication, ladite au moins une route étant déterminée selon lesdits au moins deux noeuds identifiés, une pluralité de liens de communication desdits liens de communication et au moins un niveau de charge associé à chaque lien de communication de ladite pluralité de liens de communication, et sélection d'une route déterminée ;
- estimation d'une valeur de poids associé à ladite route sélectionnée ; et,
- incrémentation d'un niveau de charge associé à chaque lien de communication de ladite route sélectionnée.

Le procédé selon l'invention permet ainsi d'optimiser le routage d'un cluster en associant des poids à des routes afin de favoriser ou défavoriser certaines routes par rapport à d'autres selon des caractéristiques du cluster et des noeud mis en oeuvre.

De façon avantageuse, tel que cela est tout aussi capturé dans la revendication 1, le procédé comprend en outre une étape d'obtention d'un type de noeud pour au moins un desdits au moins deux noeuds identifiés, ladite valeur estimée dudit poids étant au moins partiellement estimée selon ledit type de noeud obtenu. Le procédé selon l'invention permet ainsi d'optimiser le routage d'un cluster selon des types de noeuds.

Selon un mode de réalisation particulier, le procédé comprend en outre une étape d'obtention d'une référence d'un groupe auquel appartient au moins un desdits au moins deux noeuds identifiés, ladite valeur estimée dudit poids étant au moins partiellement estimée selon ladite référence de groupe obtenue. Le procédé selon l'invention permet ainsi d'optimiser le routage d'un cluster selon des types de noeuds sans qu'il soit nécessaire de caractériser individuellement chaque noeud. Un type et/ou un groupe de noeuds est, de préférence, déterminé en fonction de la nature des noeuds correspondants.

Toujours selon un mode de réalisation particulier, le procédé comprend en outre une étape d'établissement d'une matrice de poids, ladite matrice de poids représentant des poids de routes selon des identifiants de noeuds, des types et/ou des groupes de noeuds, ladite étape d'estimation d'une valeur de poids utilisant ladite matrice de poids. La gestion des poids selon des caractéristiques des noeuds est ainsi particulièrement simple à mettre en oeuvre.

Avantageusement, le procédé comprend en outre une étape d'établissement de ladite route sélectionnée entre lesdits au moins deux noeuds identifiés.

Toujours selon un mode de réalisation particulier, le procédé comprend en outre une étape de mise à jour d'au moins une table de routage statique, ladite au moins une table de routage statique étant associée à au moins un commutateur dudit cluster, ledit au moins un commutateur reliant au moins lesdits au moins deux noeuds. Le procédé selon l'invention peut ainsi être mis en oeuvre facilement, notamment dans des architectures classiques utilisant des commutateurs pourvus de tables de routage statiques.

Des routes sont avantageusement sélectionnées de façon ordonnée selon la valeur du poids qui leur est associé afin de simplifier le routage, les routes associées à de faibles poids étant plus faciles à définir que les routes associées à des poids plus importants.

Les liens de communication mis en oeuvre peuvent notamment être du type Infiniband.

L'invention a également pour objet un programme d'ordinateur comprenant des instructions adaptées à la mise en oeuvre de chacune des étapes du procédé décrit précédemment lorsque ledit programme est exécuté sur un ordinateur. Les avantages procurés par ce programme d'ordinateur sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un noeud d'un cluster ;
- la figure 3, comprenant les figures 3a à 3e, illustre le principe de routage, selon un algorithme de type FTree, dans un commutateur lors d'une phase d'initialisation d'un cluster comprenant ce commutateur ;
- la figure 4, comprenant les figures 4a à 4d, illustre un exemple du principe de routage avec des poids, dans un commutateur, conformément à l'invention, lors d'une phase d'initialisation d'un cluster comprenant ce commutateur ; et,
- la figure 5 illustre schématiquement un exemple d'algorithme mis en oeuvre pour déterminer et sélectionner une route connectant deux noeuds, durant une phase de routage d'un réseau de communication utilisant des liens de communication statiques, ainsi que pour déterminer le niveau de charge d'un lien de communication après la sélection d'une route.

Il a été observé que si les routes d'un réseau de communication dans un cluster sont de même nature, la nature des noeuds reliés par ces routes joue un rôle vis-à-vis du volume de données échangé et donc de la bande passante utilisée. Ainsi, par exemple, une route connectant deux noeuds de calcul utilise généralement moins de bande passante qu'une route connectant un noeud de calcul à un noeud de stockage.

L'invention vise donc l'utilisation de la nature des noeuds d'un cluster pour affecter un poids, ou un coefficient de pondération, aux routes connectant ces noeuds lors du routage. L'assignation d'un poids à des routes connectant certains types de noeuds d'un cluster permet de biaiser l'algorithme de routage utilisé vis-à-vis de certaines routes et, par conséquent, d'optimiser l'allocation de bande passante à chaque route dans les liens de communication mis en oeuvre.

De façon classique, lorsque l'algorithme de routage utilisé établit une route entre deux noeuds et que plusieurs possibilités se présentent, il compare les niveaux de charge associés à ces possibilités, c'est-à-dire, typiquement, le nombre de routes utilisant les liens correspondant à ces possibilités, et choisit celle dont le niveau de charge est le plus faible. Cependant, conformément à l'invention, lorsqu'une route est établie entre deux noeuds, le niveau de charge des liens de communication supportant cette route est incrémenté selon un poids dont la valeur est liée aux types de ces deux noeuds.

L'assignation d'un poids donné à certains types de routes permet de biaiser le routage en faveur de certaines routes qui ont des besoins spécifiques en termes de bande passante. Ainsi, en utilisant un poids dont la valeur est élevée pour une route connectant deux noeuds, il est possible d'allouer une bande passante plus élevée à la communication de données entre ces noeuds.

L'assignation de poids à des routes durant une phase de routage peut être réalisée à travers un API (sigle d'*Application Program Interface* en terminologie anglo-saxonne).

Selon un mode de réalisation particulier, un fichier de poids, appelé *weight_file,* est utilisé pour assigner des poids à des routes définies par des identifiants de port, appelés *port GUIDs* (sigle de *Globally Unique IDentifiers* en terminologie anglo-saxonne) dans un réseau de communication de type Infiniband.

Un tel fichier est analysé avant la phase de routage. Il contient une liste des éléments communicants du réseau de communication, typiquement des noeuds, regroupés par type, et une liste de poids pour des couples formés entre ces groupes. Lors de leur analyse, ces poids peuvent être utilisés pour remplir une matrice qui décrit l'incrément de charge devant être utilisé pour chaque lien de communication lors de la phase de routage. Par défaut, lorsque la valeur d'un poids pour une route connectant deux types de noeuds n'est pas définie, sa valeur est égale à un.

Lorsqu'une route est établie à travers un ensemble de liens durant la phase de routage, le niveau de charge associé à chacun de ces liens est incrémenté de la valeur du poids lié aux types de noeuds entre lesquels la route est établie.

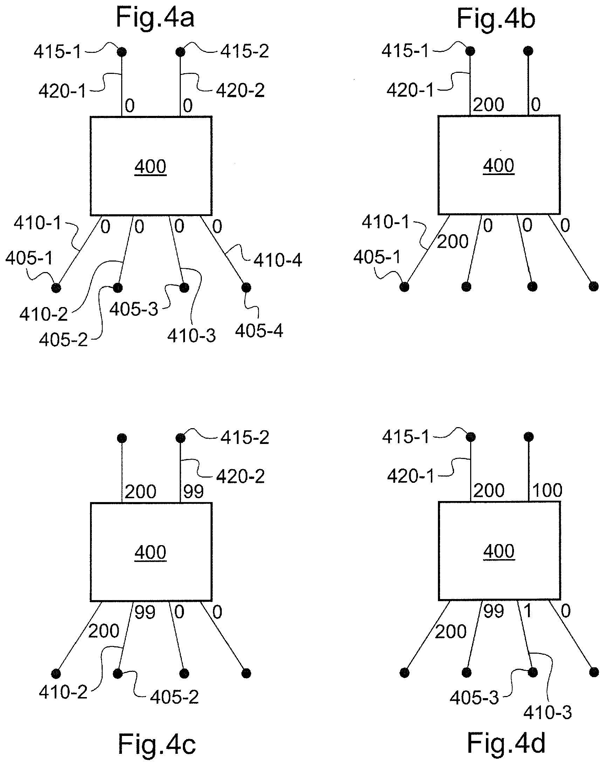

La figure 4, comprenant les figures 4a à 4d, illustre ce principe de routage dans un commutateur 400 lors d'une phase d'initialisation d'un cluster comprenant ce commutateur.

Comme le commutateur 300 illustré sur la figure 3, le commutateur 400 a ici quatre liens de communication d'entrée, notés 410-1 à 410-4, reliant le commutateur 400 à des entrées 405-1 à 405-4 et deux liens de communication de sortie, notés 420-1 et 420-2, reliant le commutateur 400 à des sorties 415-1 et 415-2. Les entrées sont, par exemple, des sorties de noeuds du réseau ou des sorties d'autres commutateurs.

Avant l'initialisation, aucun des liens 410-1 à 410-4, 420-1 et 420-2 ne comprend de route. Le niveau de charge associé à chacun de ces liens est donc nul comme illustré sur la figure 4a à côté de chaque lien. Puis, lorsqu'une route doit être établie entre l'entrée 405-1 et une sortie du commutateur 400, le lien 410-1 (le seul pouvant être utilisé) est sélectionné ainsi que le lien 420-1 (le même niveau de charge nul étant associé aux liens 420-1 et 420-2, le premier lien est sélectionné). Il est supposé ici que la route utilisant les liens 410-1 et 420-1 qui vient d'être établie a pour objet de connecter un noeud de calcul à un noeud de stockage. Par conséquent, si la valeur du poids d'une route connectant des noeuds de type calcul et stockage est 200, cette valeur est utilisée pour incrémenter le niveau de charge des liens 410-1 et 420-1, comme illustré sur la figure 4b.

De même, lorsqu'une route doit être établie entre l'entrée 405-2 et une sortie du commutateur 400, le lien 40-2 (le seul pouvant être utilisé) est sélectionné ainsi que le lien 420-2 (un niveau de charge égal à 200 étant associé au lien 420-1 et un niveau de charge nul étant associé au lien 420, ce dernier, dont le niveau de charge a la valeur la plus faible, est sélectionné).

A nouveau, s'il est admis que la route utilisant les liens 410-2 et 420-2 qui vient d'être établie a pour objet de connecter un noeud de service à un noeud de calcul et que la valeur du poids d'une route connectant des noeuds de type service et calcul est 99, cette valeur est utilisée pour incrémenter la charge des liens 410-2 et 420-2, comme illustré sur la figure 4c.

De façon similaire, lorsqu'une route doit être établie entre l'entrée 405-3 et une sortie du commutateur 400, le lien 410-3 (le seul pouvant être utilisé) est sélectionné ainsi que le lien 420-2 (un niveau de charge égal à 200 étant associé au lien 420-1 et un niveau de charge égal à 99 étant associé au lien 420, ce dernier, dont le niveau de charge a la valeur la plus faible, est sélectionné). S'il est admis que la route utilisant les liens 410-3 et 420-2 qui vient d'être établie a pour objet de lier deux noeuds de calcul et que la valeur du poids d'une route connectant des noeuds de type calcul est 1, cette valeur est utilisée pour incrémenter la charge des liens 410-3 et 420-2, comme illustré sur la figure 4d.

Ce procédé est avantageusement appliqué pour déterminer toutes les routes du cluster lors de son initialisation.

En outre, lors de la phase de routage, les routes sont, de préférence, déterminées de façon ordonnée de telle sorte qu'une route associée à un poids dont la valeur est supérieure à celle d'un poids d'une autre route soit déterminée avant cette autre route afin d'optimiser le routage. Cet ordre peut être déterminé à partir de la matrice de poids et des groupes de noeuds permettant de les identifier en fonction de leur type.

Un extrait de fichier de poids est présenté en annexe (extrait 1). Il illustre un exemple de groupage de noeuds d'un réseau de communication, chaque groupe représentant ici des types distincts de noeuds, ainsi que l'affectation de poids à des couples de type de noeuds.

Selon cet exemple, les noeuds ayant pour *port GUIDs* les valeurs 0x100901, 0x101201, 0x100903, 0x1101203, 0x101207, 0x100909 et 0x101209 sont des noeuds de type « *storage* », c'est-à-dire des noeuds de stockage. La définition d'un type de noeuds est ici réalisée à l'aide de l'indication DEF suivie du nom du groupe lui-même suivi de la liste des *port GUIDs* correspondants, placée entre accolades. De même, les noeuds ayant pour *port GUIDs* les valeurs 0x100905, 0x101205 et 0x100907 sont des noeuds de type « *admin* », c'est-à-dire des noeuds d'administration. De façon similaire, les noeuds ayant pour *port GUIDs* les valeurs 0x10090b, 0x010120b, 0x10090d, 0x10120d, 0x10090f, 0x10120f, Ox100911, 0x101211, 0x100913, 0x101213, 0x100915, 0x100917, 0x101217 et 0x100919 sont des noeud de type *« compute* », c'est-à-dire des noeuds de calcul. Par ailleurs, un type de noeuds appelé « *service* » regroupe tous les noeuds de types « *storage* » et « *admin* ».

Les poids sont ici donnés en fin de fichier. La syntaxe pour définir le poids d'une route connectant deux noeuds utilise ici la formulation « ID1 => ID2 poids » où *ID1* est le *port GUID* ou le groupe du noeud d'origine, *ID2* est le *port GUID* ou le groupe du noeud de destination et *poids* est la valeur devant être utilisée lors du calcul du niveau de charge d'un lien. Selon cet exemple, une valeur de poids égale à 200 est ajoutée à toutes les routes allant d'un noeud de calcul, noeud de type « *compute* », vers un noeud de stockage, noeud de type *« storage* » (« *compute => storage 200* »). De façon similaire, une valeur de poids égale à 99 est ajoutée à toutes les routes allant d'un noeud de service, noeud de type « *service* », vers un noeud de calcul, noeud de type « *compute* » (« *service => compute 99* »). De même, une valeur de poids égale à 200 est ajoutée à toutes les routes allant d'un noeud d'administration (noeud de type « *admin* ») vers un noeud de stockage, noeud de type « *storage* » (« *admin* => *storage 200* »).

Selon un mode de réalisation particulier, si le poids associé à une route reliant deux types de noeuds apparaît plusieurs fois dans le fichier de configuration des poids, le poids associé à cette route est égal au cumul des poids spécifiés.

Naturellement, d'autres poids peuvent être définis. De même, une syntaxe différente peut être utilisée. Par ailleurs, si, selon les exemples donnés précédemment, les routes sont considérées comme étant directionnelles, le niveau de charge associé à une route peut être le même que celui associé à la route inverse comme si les routes étaient bidirectionnelles.

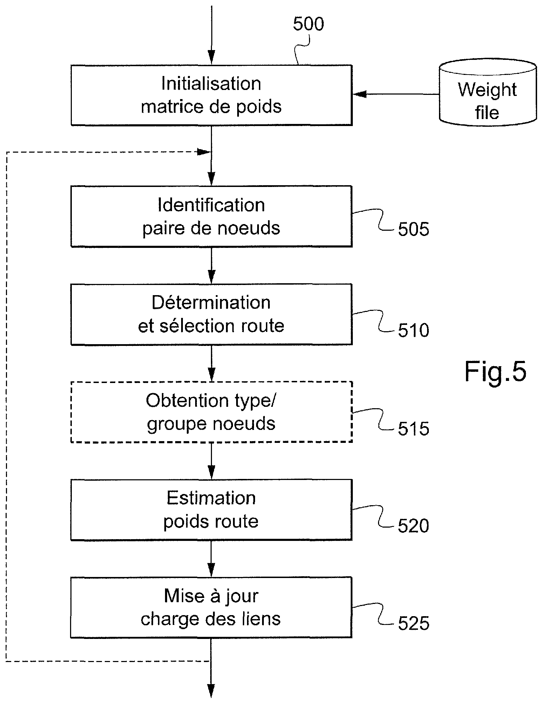

La figure 5 illustre schématiquement un exemple d'algorithme mis en oeuvre pour déterminer et sélectionner une route connectant deux noeuds, durant une phase de routage d'un réseau de communication utilisant des liens de communication statiques, ainsi que pour déterminer le niveau de charge d'un lien de communication après la sélection d'une route.

Une première étape (étape 500) a ici pour objet l'initialisation d'une matrice de poids permettant d'associer un poids à un couple de noeuds formé de deux noeuds (même poids quelque soit le sens de la route) ou d'un noeud d'origine et d'un noeud de destination (poids lié au sens d'une route) comme illustré en annexe (table 1). Cette matrice peut notamment être établie à partir d'un fichier de poids tel que celui présenté en annexe (extrait 1). Cette étape permet également de mémoriser les correspondances entre un identifiant d'un noeud avec son type et/ou un ou plusieurs groupes auxquels il appartient. Alternativement, la matrice de poids peut établir directement les poids associés à chaque couple de noeuds comme illustré partiellement en annexe (table 2).

La table 1 indique le poids devant être affecté à une route connectant un type de noeud source à un type de noeud destination tandis que la table 2 indique le poids devant être affecté à une route connectant un noeud source à un noeud destination.

Dans une étape suivante (étape 505), une paire de noeuds entre lesquels une route doit être établie est identifiée. La paire de noeuds comprend ici un noeud source et un noeud destination. Cette étape est une étape de base des algorithmes de routage pour permettre de définir les routes devant être établies. Les noeuds sont, par exemple, identifiés selon des *port GUIDs.*

Les étapes de détermination des routes possibles pour connecter ces noeuds identifiés et de sélection de la meilleure route sont alors réalisées (étape 510) selon un algorithme standard, par exemple selon l'algorithme FTree.

Dans une étape suivante (étape 515), le type des noeuds identifiés ou le ou les groupes auxquels ils appartiennent sont obtenus selon les informations obtenues durant l'étape d'initialisation. Comme suggéré par l'utilisation de traits pointillés, cette étape est optionnelle car si, en particulier, la matrice de poids déterminée durant la phase d'initialisation associe directement des poids aux identifiants des noeuds, il n'est pas nécessaire, à ce stade, d'en déterminer le type et/ou de déterminer le ou les groupes auxquels ils appartiennent.

Les types des noeuds, le ou les groupes auxquels ils appartiennent et/ou leur identifiant, par exemple leur *port GUID,* sont alors utilisés pour estimé le poids de la route connectant ces deux noeuds (étape 520). Le poids est, de préférence, directement donné par une lecture de la matrice de poids préalablement déterminée. Alternativement, un poids peut être estimé selon une référence mémorisée dans la matrice de poids selon une fonction ou une table prédéterminée. Les poids issus de la matrice de poids peuvent également être majorés ou minorés selon des circonstances particulières liées, par exemple, à la topologie du cluster et à la position des liens mis en oeuvre par la route considérée.

Le poids estimé pour la route sélectionnée est alors utilisé pour mettre à jour le niveau de charge associé aux liens de communication mis en oeuvre par la route considérée (étape 525). Comme décrit précédemment, la valeur du poids estimé peut être ajoutée au niveau de charge des liens de communication mis en oeuvre par la route considérée.

Comme suggéré par la flèche en trait pointillé, les étapes 505 à 525 peuvent être répétées pour établir de nouvelles routes. Typiquement, les étapes 505 à 525 sont répétées pour toutes les routes devant être établies dans le cluster dans lequel l'algorithme illustré sur la figure 5 est mis en oeuvre.

Il est observé que cet algorithme peut, par exemple, être mis en oeuvre dans un dispositif dont l'architecture est similaire à celle décrite en référence à la figure 2.

Cet algorithme est mis en oeuvre au niveau du gestionnaire de réseau s'exécutant sur un noeud d'administration.

Par ailleurs, il est observé que l'utilisation de poids dans un algorithme de routage est compatible avec un algorithme de gestion de qualité de service (appelé QoS, sigle de *Quality of Service* en terminologie anglo-saxonne). Il est rappelé ici que la gestion de qualité de service, typiquement basée sur des niveaux de service et des crédits associés à chaque route selon un concept de lien virtuel, permet de favoriser certaines routes en cas de contention du réseau. Cette gestion est donc indépendante du routage en lui-même. Ces deux approches sont donc complémentaires pour améliorer la transmission de données dans un cluster et ainsi améliorer les performances de ce dernier.

Naturellement, pour satisfaire des besoins spécifiques, une personne compétente dans le domaine de l'invention pourra appliquer des modifications dans la description précédente.

### ANNEXE

```
          DEF storage {
          0x100901
          0x101201
          0x100903
          0x1101203
          0x101207
          0x100909
          0x101209
          }
          DEF admin {
          0x100905
          0x101205
          0x100907
          }
          DEF service {
          storage
          admin
          }
          DEF compute {
          0x10090b
          0x10120b
          0x10090d
          0x10120d
          0x10090f
          0x10120f
          0x100911
          0x101211
          0x100913
          0x101213
          0x100915
          0x100917
          0x101217
          0x100919
          }
          compute => storage 200
          service => compute 99
          admin => storage 200
```

### Extrait 1

**Table 1**

| source/dest. | **storage** | **admin** | **service** | **compute** |
|---|---|---|---|---|
| **storage** | 1 | 1 | 1 | 99 |
| **admin** | 200 | 1 | 1 | 99 |
| **service** | 1 | 1 | 1 | 99 |
| **compute** | 200 | 1 | 1 | 1 |

**Table 2**

| source/dest. | **0x100901** | **0x101201** | **0x100903** | ... | **0x100919** |
|---|---|---|---|---|---|
| **0x100901** | - | 200 | 200 | ... | 1 |
| **0x101201** | 200 | - | | ... | 1 |
| **0x100903** | 200 | 200 | - | ... | 1 |
| ... | ... | ... | ... | - | ... |
| **0x100919** | 200 | 200 | 200 | ... | - |

## Revendications

1. Procédé pour ordinateur d'optimisation de routage dans un cluster comprenant une pluralité de noeuds, des liens de communication statiques reliant des noeuds de ladite pluralité de noeuds, ledit routage étant basé sur des niveaux de charge associés auxdits liens de communication, ce procédé comprenant les étapes suivantes,
- identification (505) d'au moins deux noeuds dudit cluster, une connexion devant être établie entre lesdits au moins deux noeuds identifiés ;
- détermination (510) d'au moins une route connectant lesdits au moins deux noeuds identifiés selon lesdits liens de communication, ladite au moins une route étant déterminée selon lesdits au moins deux noeuds identifiés, une pluralité de liens de communication desdits liens de communication et au moins un niveau de charge associé à chaque lien de communication de ladite pluralité de liens de communication, et sélection d'une route déterminée ;
- obtention (515) d'un type de noeud pour au moins un desdits au moins deux noeud identifiés ;
- estimation (520) d'une valeur de poids associé à ladite route sélectionnée, ladite valeur estimée dudit poids étant au moins partiellement estimée selon ledit type de noeud obtenu ; et,
- incrémentation (525) d'un niveau de charge associé à chaque lien de communication de ladite route sélectionnée selon ladite valeur estimée de poids associé à ladite route sélectionnée.

2. Procédé selon la revendication 1 comprenant en outre une étape d'obtention (515) d'une référence d'un groupe auquel appartient au moins un desdits au moins deux noeuds identifiés, ladite valeur estimée dudit poids étant au moins partiellement estimée selon ladite référence de groupe obtenue.

3. Procédé selon la revendication précédente selon lequel un type et/ou un groupe de noeuds est déterminé en fonction de la nature des noeuds correspondants.

4. Procédé selon l'une quelconque des revendications précédentes comprenant en outre une étape d'établissement (500) d'une matrice de poids, ladite matrice de poids représentant des poids de routes selon des identifiants de noeuds, des types et/ou des groupes de noeuds, ladite étape d'estimation d'une valeur de poids utilisant ladite matrice de poids.

5. Procédé selon l'une quelconque des revendications précédentes comprenant en outre une étape d'établissement de ladite route sélectionnée entre lesdits au moins deux noeuds identifiés.

6. Procédé selon l'une quelconque des revendications précédentes comprenant en outre une étape de mise à jour d'au moins une table de routage statique, ladite au moins une table de routage statique étant associée à au moins un commutateur dudit cluster, ledit au moins un commutateur reliant au moins lesdits au moins deux noeuds.

7. Procédé selon l'une quelconque des revendications précédentes selon lequel des routes sont sélectionnées de façon ordonnée selon la valeur du poids qui leur est associé.

8. Procédé selon l'une quelconque des revendications précédentes selon lequel lesdits liens de communication sont du type Infiniband.

9. Programme d'ordinateur comprenant des instructions adaptées à la mise en oeuvre de chacune des étapes du procédé selon l'une quelconque des revendications précédentes lorsque ledit programme est exécuté sur un ordinateur.

## Patentansprüche

1. Verfahren für einen Routing-Optimierungsrechner in einem Cluster, das mehrere Knoten umfasst, wobei statische Kommunikationsverbindungen Knoten der mehreren Knoten verbinden, wobei das Routing auf Auslastungspegeln beruht, die mit den Kommunikationsverbindungen zusammenhängen, wobei dieses Verfahren die folgenden Schritte umfasst:
- Identifizieren (505) mindestens zweier Knoten des Clusters, wobei eine Verbindung zwischen den mindestens zwei identifizierten Knoten hergestellt sein muss;
- Bestimmen (510) mindestens einer Route, welche die mindestens zwei identifizierten Knoten entsprechend den Kommunikationsverbindungen verbindet, wobei die mindestens eine Route entsprechend den mindestens zwei identifizierten Knoten, mehreren Kommunikationsverbindungen der Kommunikationsverbindungen und mindestens einem Auslastungspegel bestimmt wird, der mit jeder Kommunikationsverbindung der mehreren Kommunikationsverbindungen zusammenhängt, und Auswählen einer bestimmten Route;
- Erhalten (515) eines Knotentyps für mindestens einen der mindestens zwei identifizierten Knoten;
- Schätzen (520) eines Werts einer Gewichtung, die der ausgewählten Route zugeordnet ist, wobei der Schätzwert der Gewichtung zumindest teilweise entsprechend dem erhaltenen Knotentyp geschätzt wird; und
- Inkrementieren (525) eines Auslastungspegels, der mit jeder Kommunikationsverbindung der ausgewählten Route zusammenhängt, entsprechend dem Schätzwert der Gewichtung, die der ausgewählten Route zugeordnet ist.

2. Verfahren nach Anspruch 1, darüber hinaus einen Schritt zum Erhalten (515) einer Referenz einer Gruppe umfassend, zu der mindestens einer der mindestens zwei identifizierten Knoten gehört, wobei der Schätzwert der Gewichtung zumindest teilweise entsprechend der erlangten Gruppenreferenz geschätzt wird.

3. Verfahren nach dem vorhergehenden Anspruch, wobei ein Typ und/oder eine Gruppe von Knoten in Abhängigkeit von der Beschaffenheit der entsprechenden Knoten bestimmt wird.

4. Verfahren nach einem der vorhergehenden Ansprüche, darüber hinaus einen Erstellungsschritt (500) für eine Gewichtungsmatrix umfassend, wobei die Gewichtungsmatrix Routengewichtungen entsprechend Kennungen von Knoten, Typen und/oder Gruppen von Knoten darstellt, wobei der Schritt zum Schätzen eines Gewichtungswerts die Gewichtungsmatrix verwendet.

5. Verfahren nach einem der vorhergehenden Ansprüche, darüber hinaus einen Schritt zum Herstellen der ausgewählten Route zwischen den mindestens zwei identifizierten Knoten umfassend.

6. Verfahren nach einem der vorhergehenden Ansprüche, darüber hinaus einen Schritt zur Aktualisierung mindestens einer statischen Routing-Tabelle umfassend, wobei die mindestens eine statische Routing-Tabelle mindestens einem Umschalter des Clusters zugeordnet ist, wobei der mindestens eine Umschalter zumindest die mindestens zwei Knoten verbindet.

7. Verfahren nach einem der vorhergehenden Ansprüche, wobei die Routen entsprechend dem Wert der ihnen zugeordneten Gewichtung geordnet ausgewählt werden.

8. Verfahren nach einem der vorhergehenden Ansprüche, wobei die Kommunikationsverbindungen Kommunikationsverbindungen vom Typ Infiniband sind.

9. Rechnerprogramm, das Instruktionen umfasst, die zur Umsetzung jedes der Schritte des Verfahrens nach einem der vorhergehenden Ansprüche angepasst sind, wenn das Programm auf einem Rechner abläuft.

## Claims

1. Computer method for optimizing routing in a cluster comprising a plurality of nodes, static communication links linking nodes of said plurality of nodes, said routing being based on load levels associated with said communication links, the method comprising the following steps:
- identifying (505) at least two nodes of said cluster, a connection having to be established between said at least two identified nodes;
- determining (510) at least one route connecting said at least two identified nodes according to said communication links, said at least one route being determined according to said at least two identified nodes, a plurality of communication links of said communication links, and at least one load level associated with each communication link of said plurality of communication links, and selecting a determined route;
- obtaining (515) a type of node for at least one of said at least two identified nodes;
- estimating (520) a weight value associated with said selected route, said estimated value of said weight being at least partially estimated according to said type of node obtained; and
- incrementing (525) a load level associated with each communication link of said selected route according to said estimated weight value associated with said selected route.

2. Method according to claim 1, further comprising a step (515) of obtaining a reference of a group to which belongs at least one of said at least two identified nodes, said estimated value of the weight being at least partially estimated according to said group reference obtained.

3. Method according to the preceding claim, according to which a type and/or a group of nodes is determined according to the nature of the corresponding nodes.

4. Method according to any one of the preceding claims, further comprising a step (500) of establishing a weight array, said weight array representing weights of routes according to node identifiers, types and/or groups of nodes, said step of estimating a weight value using said weight array.

5. Method according to one of the preceding claims, further comprising a step of establishing said selected route between said at least two identified nodes.

6. Method according to any one of the preceding claims, further comprising a step of updating at least one static routing table, said at least one static routing table being associated with at least one switch of said cluster, said at least one switch linking at least said at least two nodes.

7. Method according to any one of the preceding claims, according to which routes are selected in order according to the value of the weight associated with them.

8. Method according to any one of the preceding claims, according to which said communication links are of the Infiniband type.

9. Computer program comprising instructions adapted for the carrying out of each of the steps of the method according to any one of the preceding claims when said program is executed on a computer.
